# EUROPEAN PATENT SPECIFICATION

(11) **EP 3 601 646 B1**
(45) Date of publication and mention of the grant of the patent: **25.12.2024**
(21) Application number: 18770244.4
(22) Date of filing: 12.03.2018
(51) Int. Cl.: D02G 3/44, D03D 15/00, B29C 70/02, B29C 70/08, B29C 70/14, B29C 70/88, B29C 70/16, C08J 5/06, C08J 5/10, B29K 105/16, B29K 105/12

(54) **FIBER-REINFORCED COMPOSITE, METHOD THEREFOR, AND ARTICLE COMPRISING THE SAME**
FASERVERSTÄRKTER VERBUNDSTOFF, VERFAHREN DAFÜR UND ARTIKEL MIT DIESEM VERBUNDWERKSTOFF
COMPOSITE RENFORCÉ PAR DES FIBRES, SON PROCÉDÉ DE FABRICATION, ET ARTICLE COMPRENANT DE TELS COMPOSITES RENFORCÉS PAR DES FIBRES

(30) Priority: 23.03.2017 US 201762475667 P
(43) Date of publication of application: 05.02.2020
(73) Proprietor: Boston Materials, Inc., Bedford, MA 01730 (US)
(72) Inventor: GURIJALA, Anvesh, Lancaster, MA 01523 (US); SEGAL, Michael, Needham, MA 02494 (US)
(74) Representative: Hoffmann Eitle
(86) International application number: PCT/US2018/021975
(87) International publication number: WO 2018/175134

(56) References cited:
- EP-A1- 3 184 288
- EP-A2- 2 013 408
- EP-B1- 2 013 408
- WO-A1-01/25514
- JP-A- H07 197 311
- US-A- 5 432 000
- US-A1- 2005 239 948
- US-A1- 2009 117 269
- US-A1- 2010 196 688
- US-A1- 2012 289 107
- US-B1- 8 173 857

## Description

### RELATED APPLICATIONS

This application claims the benefit of U.S. Provisional Patent Application Serial No. 62/475,667, filed March 23, 2017, entitled "Fiber-Reinforced Composites, Methods Therefore And Articles Comprising The Same,".

### FIELD

Disclosed herein are fiber-reinforced composites. These materials are useful in load-bearing components for mechanical systems, and other applications. Also disclosed herein are methods of making and using such composites, articles comprising the same, and the like.

### BACKGROUND

Mechanical systems such as airplanes, spacecraft, cars, trains, wind turbines, protective equipment, sporting equipment, medical implants, and the like have become increasingly thinner and lighter. The increasing performance requirements of such mechanical systems are resulting in higher stresses on components. Sensitive elements in a mechanical system may need to be maintained within a prescribed deformation limit to avoid significant performance degradation or even a catastrophic failure.

In this context, fiber-reinforced composites (FRC) have been developed to effectively cope with high stresses with minimal plastic deformation. In general, these FRCs are based on polymers, including thermoset polymers, that contain reinforcing fibers. For example, epoxy resins are some of the most popular thermoset polymers in the art, owing to their good adhesive properties and processability. Epoxy resins themselves, however, have relatively low mechanical strength and, therefore, do not effectively facilitate stress in high performance mechanical systems. Consequently, mechanically reinforcing fiber materials such carbon, glass, aramid, basalt, or boron are usually incorporated in the polymer to achieve effective mechanical strength.

Generally, relatively high filler loadings, typically larger than 40 volume percent, are required to achieve the desired mechanical strength. Commonly, dense fiber loadings are achieved through the orientation of long reinforcing fibers into a textile. Long-fiber reinforced composites (LFRC) use a polymer matrix reinforced by a dispersed phase in the form of continuous fibers. LFRCs offer exceptional mechanical strength in planar directions. Alternatively, dense fiber loadings can also be achieved with short reinforcing fibers. Short-fiber reinforced composites (SFRC) use a polymer matrix reinforced by a dispersed phase in the form of discontinuous fibers. Discontinuous fibers are classified by a general aspect ratio, defined as the ratio of fiber length to diameter, of between 10 and 60. Discontinuous fibers can be randomly or preferentially oriented to yield directionally varying mechanical properties.

A high filler loading of reinforcing fiber is required to observe a significant boost in mechanical strength. The continuous fibers in LFRCs are oriented and constructed prior to the dispersion into a polymer matrix. Conversely, the orientation of discontinuous fibers in SFRCs is modulated after the dispersion into a polymer matrix. Consequently, the high filler loading of discontinuous fibers reduces the processability of the material because the viscosity of the composite increases with the filler volume fraction.

In the view of the above, there remains a need for fiber-reinforced composites for mechanical systems that are easily processable, possess improved homogenous and multi-directional, or isotropic, material properties, or where improved mechanical strength can increase resistance to plastic deformation and catastrophic failure in high stress environments.

Document EP 3 184 288 A1 discloses a fibre composite component with aligned discontinuous fibres creating an electrically conductive path between the layers of continuous fibres.

### SUMMARY

Disclosed herein are fiber-reinforced composites. These materials are useful in load-bearing components for mechanical systems, and other applications. Also disclosed herein are methods of making and using such composites, articles comprising the same, and the like.

In one aspect, the present invention is directed to an article as defined in claim 1.

The article, according to another set of embodiments, is generally directed to a composite comprising a fabric defined by a plurality of continuous fibers, and a plurality of aligned discontinuous agents contained within pores within the fabric.

In yet another set of embodiments, the article comprises a layered composite comprising a plurality of plies, at least one ply comprising a plurality of continuous fibers defining a substrate, and a plurality of discontinuous agents contained within the substrate.

According to still another set of embodiments, the article includes a composite comprising a plurality of continuous fibers defining a substrate, and a plurality of discontinuous agents contained within the substrate. In some cases, at least some of the plurality of discontinuous agents have a plurality of magnetic particles adsorbed thereto.

The article, in yet another set of embodiments, includes a composite comprising a plurality of continuous fibers defining a substrate, and a plurality of discontinuous agents contained within at least a portion of the substrate.

In another aspect, the present invention is directed to a method according to claim 9. The method includes providing a liquid comprising a plurality of discontinuous agents having a plurality of magnetic particles adsorbed thereto, wherein at least some of the discontinuous agents comprise discontinuous fibers, wherein the discontinuous fibers have an average diameter of between 10 micrometers and 100 micrometers, exposing the liquid to a plurality of continuous fibers defining a substrate, applying a magnetic field to the liquid to cause alignment of at least some of the plurality of discontinuous agents within the plurality of continuous fibers, and hardening the liquid to form a composite comprising the substrate, such that the plurality of discontinuous agents comprises at least 40% of the mass of the composite.

Other advantages and novel features of the present invention will become apparent from the following detailed description of various non-limiting embodiments of the invention when considered in conjunction with the accompanying figures.

### BRIEF DESCRIPTION OF THE DRAWINGS

Non-limiting embodiments of the present invention will be described by way of example with reference to the accompanying figures, which are schematic and are not intended to be drawn to scale. In the figures, each identical or nearly identical component illustrated is typically represented by a single numeral. For purposes of clarity, not every component is labeled in every figure, nor is every component of each embodiment of the invention shown where illustration is not necessary to allow those of ordinary skill in the art to understand the invention. In the figures:
Figs. 1A-1B illustrate composites in accordance with some embodiments of the invention; and
Fig. 2 is a schematic diagram in accordance with certain embodiments of the invention.

### DETAILED DESCRIPTION

Disclosed herein are fiber-reinforced composites. These materials are useful in load-bearing components for mechanical systems, and other applications. Also disclosed herein are methods of making and using such composites, articles comprising the same, and the like.

Embodiments of the invention are directed to composites comprising discontinuous agents such as fibers or platelets which are positioned within a substrate formed from a plurality of continuous fibers. In some cases, the discontinuous agents may be substantially aligned, for example, by attaching magnetic particles onto the agents and using a magnetic field to manipulate the agents. Other embodiments are generally directed to systems and methods for making such composites.

For instance, certain aspects of the invention are generally directed to fiber-reinforced composite ply with a matrix of discontinuous fibers aligned in the through-plane direction that are fixed in position with a binder and embed a planar fabric of continuous fibers. Aligning particles transversely to the planar fabric can enhance the mechanical, electrical, and/or thermal properties in the transverse direction and interlaminar regions between plies. The discontinuous fibers and similarly sized particles are aligned using a magnetic alignment process in which non-magnetic agents are surface-coated with magnetic particles, allowing the originally non-magnetic particles to exhibit a physical response to magnetic fields. The immediate focus is implementing this alignment method with discontinuous carbon fibers. However, other agents can also be aligned, including (but not limited to) materials in fiber, platelet, and ellipsoid form, etc.

Embodiments of the invention are directed to composite plies with a discontinuous fiber matrix that embed a planar fabric of continuous fibers, regardless of orientation. Other embodiments are generally directed to fiber-reinforced composite plies that do not have oriented, magnetically functionalized particles.

Particles typically used in composites are diamagnetic, requiring extremely high magnetic fields for alignment (greater than 1 Tesla). However, in some embodiments, discontinuous carbon fibers and other similarly sized particles can be surface-coated with magnetic nanoparticles make them more responsive to magnetic fields.

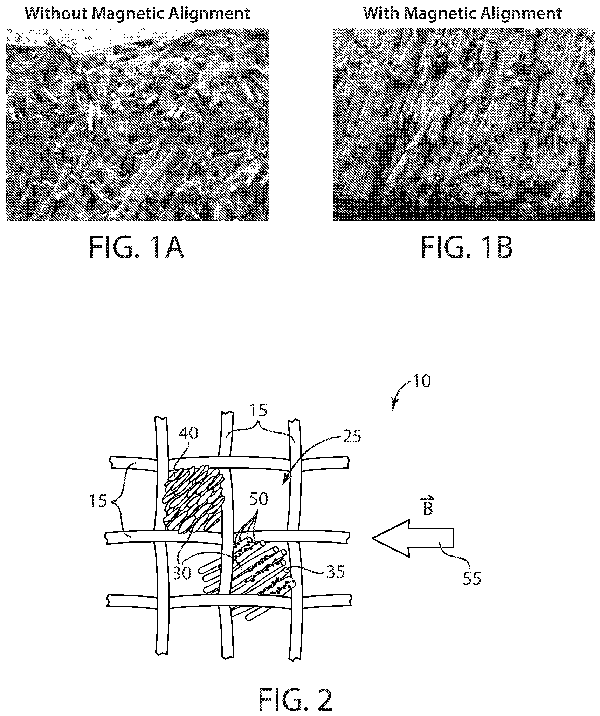

In some embodiments, selection of the proper geometry of particles leads to a magnetic response that may reduce the required magnetic field strength for alignment by over one hundred-fold. For example, sub-millimeter discontinuous carbon fibers can be successfully magnetized to exhibit a suitable magnetic response. The produced magnetically responsive particles can be controlled with magnetic fields to produce composites with tunable orientation and distribution of particles, e.g., as shown in Fig. 1.

Another aspect of the present invention is generally directed to composites comprising substrates having a plurality of discontinuous agents, such as fibers or platelets. The discontinuous agents may be generally substantially aligned within the substrate in some embodiments, for example, substantially orthogonally aligned. The substrate itself may be defined by generally continuous fibers, which may be woven or non-woven to form the substrate. In certain instances, some of the holes or pores created by the continuous fibers may be filled in by the discontinuous agents. In addition, in some embodiments, the composite may further comprise binders or other materials, such as those discussed herein.

In certain embodiments, magnetic particles can be attached to the discontinuous agents, and a magnetic field may then be used to manipulate the magnetic particles. For instance, the magnetic field may be used to move the magnetic particles into the substrate, and/or to align the discontinuous agents within the substrate. The magnetic field may be constant or time-varying (e.g., oscillating), for instance, as is discussed herein. For example, an applied magnetic field may have a frequency of 1 Hz to 500 Hz and an amplitude of 0.01 T to 10 T. Other examples of magnetic fields are described in more detail below. The volume of magnetic particles used to manipulate the magnetic particles may be substantial in some cases.

As an illustrative non-limiting example, in Fig. 2, a composite 10 comprises a plurality of continuous fibers 15 (in this example, woven together to form a substrate). Gaps 25 between the fibers may be empty, or filled with discontinuous agents 30. The discontinuous agents may be, for example, fibers 35 and/or platelets 40, and/or may have other shapes such as those discussed herein. In some embodiments, the agents may also be aligned, e.g., as is shown with fibers 35. Some of the discontinuous agents may include magnetic particles 50 that are adsorbed or otherwise attached to the discontinuous agents. An applied magnetic field 55 may in some embodiments be used to manipulate the magnetic particles, e.g., to cause them to align the discontinuous agents, and/or to move them into one or more of the gaps within the substrate.

Such composites may find use in a wide variety of applications. As non-limiting examples, such composites may be useful for eliminating or reducing stress concentrations or delamination within materials, stiffening materials, eliminating or reducing surface wear, dissipating electrical shocks, transmitting electrical signals, attenuating or transmitting electromagnetic waves, dissipating thermal shocks, eliminating or reducing thermal gradients, as components for energy storage applications, or as components for carbon fibers or ceramic matrixes. Additional examples are discussed in more detail below.

The embodiments of the present invention that are directed to composites comprising continuous fibers and discontinuous agents, e.g., that can be manipulated using magnetic particles in a suitable magnetic field.

Embodiments of the invention are directed to composites comprising a plurality of continuous fibers defining a substrate, and a plurality of discontinuous agents contained within the substrate. For instance, at least some of the plurality of discontinuous agents may be contained within holes or pores of the substrate, e.g., created by spacing between the continuous fibers that define the substrate. In some cases, the discontinuous agents may be substantially aligned within the holes or pores. The composite may, in some cases, also contain a plurality of particles, such as magnetic particles, adsorbed onto the continuous fibers and/or the discontinuous agents, which may be used to manipulate the agents, e.g., with an applied magnetic field. In some cases, a binder may be present, for example, to bind the continuous fibers and/or the discontinuous agents within the composite.

In some cases, the composite is generally planar. However, it should be understood that such a substrate need not be a mathematically-perfect planar structure (although it can be); for instance, the substrate may also be deformable, curved, bent, folded, rolled, creased, or the like. As examples, the substrate may have an average thickness of at least about 0.1 micrometers, at least about 0.2 micrometers, at least about 0.3 micrometers, at least about 0.5 micrometers, at least about 1 micrometer, at least about 2 micrometers, at least about 3 micrometers, at least about 5 micrometers, at least about 10 micrometers, at least about 30 micrometers, at least about 50 micrometers, at least about 100 micrometers, at least about 300 micrometers, at least about 500 micrometers, at least about 1 mm, at least about 2 mm, at least about 3 mm, at least about 5 mm, at least about 1 cm, at least about 3 cm, at least about 5 cm, at least about 10 cm, at least about 30 cm, at least about 50 cm, at least about 100 cm, etc. In certain instances, the average thickness may be less than 100 cm, less than 50 cm, less than 30 cm, less than 10 cm, less than 5 cm, less than 3 cm, less than 1 cm, less than 5 mm, less than 2 mm, less than 3 mm, less than 1 mm, less than 500 micrometers, less than 300 micrometers, less than 100 micrometers, less than 50 micrometers, less than 30 micrometers, less than 10 micrometers, less than 5 micrometers, less than 3 micrometers, less than 1 micrometers, less than 0.5 micrometers, less than 0.3 micrometers, or less than 0.1 micrometers. Combinations of any of these are also possible in certain embodiments. For instance, the average thickness may be between 0.1 and 5,000 microns, between 10 and 2,000 microns, between 50 and 1,000 microns, or the like. The thickness may be uniform or nonuniform across the substrate. Also, the substrate may be rigid (e.g., as discussed herein), or may be deformable in some cases.

In some cases, the pores or holes that are created by the continuous fibers may be relatively small. Some or all of the pores or holes may contain discontinuous agents, which may be aligned in some cases. The pores or holes may have an average size or cross-sectional dimension of no more than 10 cm, no more than 5 cm, no more than 3 cm, no more than 2 cm, no more than 1 cm, no more than 5 mm, no more than 3 mm, no more than 2 mm, no more than 1 mm, no more than 500 micrometers, no more than 300 micrometers, no more than 200 micrometers, no more than 100 micrometers, no more than 50 micrometers, no more than 30 micrometers, no more than 20 micrometers, no more than 10 micrometers, etc.

Composites may be used in a wide variety of applications, including those discussed in more detail herein. As non-limiting examples, composites may be used in diverse applications such as reinforcement for pressure vessels, components for wind turbines, shims used in jacking heavy structures, sporting equipment, building or construction materials, laminates or encapsulants for electronic devices, battery components, or panels for vehicles such as automobiles, aircraft, marine vehicles, or spacecraft.

As mentioned, embodiments of the invention are directed to composites comprising substrates formed from continuous fibers, and containing a plurality of discontinuous agents, e.g., fibers or platelets. The continuous fibers generally have a length that on average is substantially longer than the characteristic dimension of the discontinuous agents. For instance, the continuous fibers may have an average length that is greater than 10, greater than 30, greater than 50, greater than 100, greater than 300, greater than 500, or greater than 1,000 times the characteristic dimension of the discontinuous agents. In some embodiments, the continuous fibers have an average aspect ratio (e.g., of length to diameter or average cross-sectional dimension) of at least 3, at least 5, at least 10, at least 30, at least 50, at least 100, at least 300, at least 500, at least 1,000, etc. Additionally, in certain cases, the continuous fibers may have an average length of at least 1 nm, at least 3 nm, at least 5 nm, at least 10 nm, at least 30 nm, at least 50 nm, at least 100 nm, at least 300 nm, at least 500 nm, at least 1 micrometer, at least 3 micrometers, at least 5 micrometers, at least 10 micrometers, at least 30 micrometers, at least 50 micrometers, at least 100 micrometers, at least 300 micrometers, at least 500 micrometers, at least 1 mm, at least 3 mm, at least 5 mm, at least 1 cm, at least 3 cm, at least 5 cm, or at least 10 cm. Longer average lengths are also possible in some instances.

The continuous fibers may be woven together (e.g. bidirectional, multidirectional, quasi-isotropic, etc.), and/or non-woven (e.g., unidirectional, veil, mat, etc.). In certain embodiments, at least some of the continuous fibers are substantially parallel, and/or orthogonally oriented relative to each other, although other configurations of continuous fibers are also possible. In certain embodiments, the continuous fibers may together define a fabric or other substrate, e.g., a textile, a tow, a filament, a yarn, a strand, or the like. In some cases, the substrate may have one orthogonal dimension that is substantially less than the other orthogonal dimensions (i.e., the substrate may have a thickness).

The continuous fibers forming the substrate may comprise any of a wide variety of materials, and one type or more than one type of fiber may be present within the substrate. Non-limiting examples include carbon, basalt, silicon carbide, aramid, zirconia, nylon, boron, alumina, silica, borosilicate, mullite, cotton, or any other natural or synthetic fibers.

The continuous fibers may have any suitable average diameter. For example, the continuous fibers may have an average diameter of at least 10 micrometers, at least 20 micrometers, at least 30 micrometers, at least 50 micrometers, at least 100 micrometers, at least 200 micrometers, at least 300 micrometers, at least 500 micrometers, at least 1 mm, at least 2 mm, at least 3 mm, at least 5 mm, at least 1 cm, at least 2 cm, at least 3 cm, at least 5 cm, at least 10 cm, etc. In certain embodiments, the continuous fibers may have an average diameter of no more than 10 cm, no more than 5 cm, no more than 3 cm, no more than 2 cm, no more than 1 cm, no more than 5 mm, no more than 3 mm, no more than 2 mm, no more than 1 mm, no more than 500 micrometers, no more than 300 micrometers, no more than 200 micrometers, no more than 100 micrometers, no more than 50 micrometers, no more than 30 micrometers, no more than 20 micrometers, no more than 10 micrometers, etc. Combinations of any of these are also possible. For example, the continuous fibers may have an average diameter of between 10 micrometers and 100 micrometers, between 50 micrometers and 500 micrometers, between 100 micrometers and 5 mm, etc.

The continuous fibers may also have any suitable average length. For example, the continuous fibers may have an average length of at least about 0.5 cm, at least 1 cm, at least 2 cm, at least 3 cm, at least 5 cm, at least 10 cm, etc. In certain embodiments, the continuous fibers may have an average diameter of no more than 10 cm, no more than 5 cm, no more than 3 cm, no more than 2 cm, no more than 1 cm, no more than 0.5 cm, or the like. Combinations of any of these are also possible; for example, the continuous fibers may have an average length of between 1 cm and 10 cm, between 10 cm and 100 cm, etc.

In some instances, the continuous fibers may comprise a relatively large portion of the composite. For example, in certain embodiments, the continuous fibers may comprise at least 1%, at least 2%, at least 3%, at least 4%, at least 5%, at least 7%, at least 10%, at least 15%, at least 20%, at least 25%, at least 30%, at least 35%, at least 40%, at least 45%, at least 50%, at least 55%, at least 60% of the mass of the composite. In some cases, the continuous fibers comprise no more than 60%, no more than 50%, no more than 40%, no more than 30%, no more than 20%, or no more than 10% of the mass of the composite. Combinations of any of these are also possible.

The composite contains also one or more discontinuous agents. The agents may include agglomerated agents or individual agents. The agents may have a variety of shapes, including discontinuous fibers or platelets. Other shapes include, but are not limited to, nanotubes, nanofibers, nanosheets, or the like. In one set of embodiments, the discontinuous agents are not spherical. Typically, a fiber has a shape such that one orthogonal dimension (e.g., its length) is substantially greater than its other two orthogonal dimensions (e.g., its width or thickness). The fiber may be substantially cylindrical in some cases. Similarly, a platelet may have a shape such that two orthogonal dimensions (e.g., its diameter) are substantially greater than its other orthogonal dimension (e.g., its width or thickness). A platelet may be substantially cylindrical or disc-shaped in some cases, although it may have other shapes as well. In addition, it should be understood that both platelets and fibers may be present in some cases, and/or that other shapes besides platelets and/or fibers may be present in certain embodiments (e.g., instead of or in addition to platelets and/or fibers).

It should be understood that discontinuous agents such as platelets and/or fibers may be relatively stiff, or may be curved or flexible in some cases, or adopt a variety of other shapes. For instance, a fiber need not be perfectly straight (e.g., its length may still be determined along the fiber itself, even if it is curved). Similarly, a platelet need not be perfectly disc-shaped.

In one set of embodiments, the discontinuous agents may have a dimension (e.g., a characteristic dimension) that is substantially the same, or smaller, than the thickness of the substrate. For example, at least some discontinuous fibers within a composite may have an average length that substantially spans the thickness of the substrate. However, in other cases, the dimension may be greater than the thickness.

As mentioned, embodiments of the invention are directed to composites comprising discontinuous fibers. In some cases, the discontinuous fibers within a composite may have an average length, or characteristic dimension, of at least 1 nm, at least 3 nm, at least 5 nm, at least 10 nm, at least 30 nm, at least 50 nm, at least 100 nm, at least 300 nm, at least 500 nm, at least 1 micrometer, at least 3 micrometers, at least 5 micrometers, at least 10 micrometers, at least 20 micrometers, at least 30 micrometers, at least 50 micrometers, at least 100 micrometers, at least 200 micrometers, at least 300 micrometers, at least 500 micrometers, at least 1 mm, at least 2 mm, at least 3 mm, at least 5 mm, at least 1 cm, at least 1.5 cm, at least 2 cm, at least 3 cm, at least 5 cm, at least 10 cm, etc. In certain embodiments, the discontinuous fibers may have an average length, or characteristic dimension, of no more than 10 cm, no more than 5 cm, no more than 3 cm, no more than 2 cm, no more than 1.5 cm, no more than 1 cm, no more than 5 mm, no more than 3 mm, no more than 2 mm, no more than 1 mm, no more than 500 micrometers, no more than 300 micrometers, no more than 200 micrometers, no more than 100 micrometers, no more than 50 micrometers, no more than 30 micrometers, no more than 20 micrometers, no more than 10 micrometers, no more than 5 micrometers, no more than 3 micrometers, no more than 1 micrometers, no more than 500 nm, no more than 300 nm, no more than 100 nm, no more than 50 nm, no more than 30 nm, no more than 10 nm, no more than 5 nm, etc. Combinations of any of these are also possible. For example, the discontinuous fibers within a composite may have an average length of between 5 mm and 15 mm, or between 1 mm and 5 mm, between 1 mm and 1 cm, etc.

In addition, the discontinuous fibers have an average diameter of between 10 micrometers and 100 micrometers. The discontinuous fibers may have an average diameter of at least 10 micrometers, at least 20 micrometers, at least 30 micrometers, at least 50 micrometers, at least 100 micrometers. In certain embodiments, the discontinuous fibers may have an average diameter of no more than 100 micrometers, no more than 50 micrometers, no more than 30 micrometers, no more than 20 micrometers, no more than 10 micrometers, etc. Combinations of any of these are also possible.

In certain embodiments, the discontinuous fibers may have a length that is at least 10 times or at least 50 times its thickness or diameter, on average. In some cases, the fibers within a composite may have an average aspect ratio (ratio of fiber length to diameter or thickness) of at least 3, at least 5, at least 10, at least 30, at least 50, at least 100, at least 300, at least 500, at least 1,000, at least 3,000, at least 5,000, at least 10,000, at least 30,000, at least 50,000, or at least 100,000. In some cases, the average aspect ratio may be less than 100,000, less than 50,000, less than 30,000, less than 10,000, less than 5,000, less than 3,000, less than 1,000, less than 500, less than 300, less than 100, less than 50, less than 30, less than 10, less than 5, etc. Combinations of any of these are also possible in some cases; for instance, the aspect ratio may be between 5, and 100,000.

As mentioned, the composite is not limited to only discontinuous fibers. In certain embodiments, a composite may include platelets, e.g., in addition to discontinuous fibers. Typically, a platelet may be disc-shaped, although other shapes may be possible as well.

In some cases, the platelet may have a maximum dimension or a characteristic dimension of at least 10 micrometers, at least 20 micrometers, at least 30 micrometers, at least 50 micrometers, at least 100 micrometers, at least 200 micrometers, at least 300 micrometers, at least 500 micrometers, at least 1 mm, at least 2 mm, at least 3 mm, at least 5 mm, at least 1 cm, at least 1.5 cm, at least 2 cm, at least 3 cm, at least 5 cm, at least 10 cm, etc. In certain embodiments, the platelet have a maximum dimension or a characteristic dimension of no more than 10 cm, no more than 5 cm, no more than 3 cm, no more than 2 cm, no more than 1.5 cm, no more than 1 cm, no more than 5 mm, no more than 3 mm, no more than 2 mm, no more than 1 mm, no more than 500 micrometers, no more than 300 micrometers, no more than 200 micrometers, no more than 100 micrometers, no more than 50 micrometers, no more than 30 micrometers, no more than 20 micrometers, no more than 10 micrometers, etc. If the platelet does not have a substantially circular face (for example, if the platelet has an oblong or an irregular face), then the characteristic dimension may be taken as a diameter of a perfect circle having the same area as the face of the platelet. Combinations of any of these dimensions are also possible. For example, the maximum dimension or a characteristic dimension may be between 5 mm and 15 mm, or between 1 mm and 5 mm, between 1 mm and 1 cm, etc.

In certain embodiments, the platelet may have an average aspect ratio (ratio of largest dimension to smallest dimension or thickness) of at least 3, at least 5, at least 10, at least 30, at least 50, at least 100, at least 300, at least 500, at least 1,000, etc. In some cases, the average aspect ratio may be less than 1,000, less than 500, less than 300, less than 100, less than 50, less than 30, less than 10, less than 5, etc. Combinations of any of these are also possible in some cases; for instance, the aspect ratio may be between 5, and 1,000.

The discontinuous agents may be formed or include any of a wide variety of materials, and one or more than one type of material may be present. For example, the discontinuous agents may comprise materials such as carbon (e.g., carbon fibers), basalt, silicon carbide, silicon nitride, aramid, zirconia, nylon, boron, alumina, silica, borosilicate, mullite, nitride, boron nitride, graphite, glass, or the like. The discontinuous agents may include any natural and/or any synthetic material, and may be magnetic and/or non-magnetic.

In some instances, the discontinuous agents may comprise a relatively large portion of the composite. The discontinuous agents according to the invention comprise at least 40% of the mass of the composite. In certain embodiments, the discontinuous agents may comprise at least 45%, at least 50%, at least 55%, at least 60%, at least 65%, at least 70%, at least 75%, at least 80%, at least 85%, at least 90%, at least 95%, or at least 97% of the mass of the composite. In some cases, the discontinuous agents comprise no more than 97%, no more than 95%, no more than 90%, no more than 85%, no more than 80%, no more than 70%, no more than 60%, no more than 50%, or no more than 40%of the mass of the composite. Combinations of any of these are also possible.

The discontinuous agents, in some embodiments, may be at least substantially aligned within the composite. Methods for aligning discontinuous agents, such as fibers, are discussed in more detail herein. Various alignments are possible, and in some cases, can be determined optically or microscopically, e.g., as is shown in Fig. 1B. Thus, in some cases, the alignment may be determined qualitatively. However, it should be understood that the alignment need not be perfect. In some cases, at least 50%, at least 75%, at least 85%, at least 90%, or at least 95% of the discontinuous agents within a composite may exhibit an alignment that is within 20°, within 15°, within 10°, or within 5° of the average alignment of the plurality of the discontinuous agents, e.g., within a sample of the composite.

In certain instances, the alignment of the discontinuous particles is substantially orthogonal to the substrate. For example, the average alignment may be oriented to be at least 60°, at least 65°, at least 70°, at least 75°, at least 85°, or at least 87° relative to the plane of the substrate at that location. As mentioned, the substrate itself may not necessarily be planar, but may also be curved, etc.

Without wishing to be bound by any theory, it is believed that alignment of the discontinuous particles substantially orthogonal to the substrate may serve to provide reinforcement of the substrate. This may improve the strength of the substrate, e.g., when subjected to forces in different directions. For instance, fibers within the substrate may run in substantially orthogonal directions in 3 dimensions, thereby providing strength to the substrate regardless of the direction of force that is applied. The discontinuous particles may also limit degradation of the surface, e.g., with interlaminar micro-cracks, through-ply fissures, or the like. In addition, in some embodiments, the discontinuous particles may enhance other properties of the substrate, e.g., electrical and/or thermal properties within the composite, in addition to or instead of its mechanical properties.

At least some of the discontinuous agents may be uncoated. In some cases, however, some or all of the discontinuous agents may be coated. The coating may be used, for example, to facilitate the adsorption or binding of particles, such as magnetic particles, onto the agents. As non-limiting examples, the agents may be coated with a surfactant, a silane coupling agent, an epoxy, glycerine, polyurethane, an organometallic coupling agent, or the like. Non-limiting examples of surfactants include oleic acid, sodium dodecyl sulfate, sodium lauryl sulfate, etc. Non-limiting examples of silane coupling agents include amino-, benzylamino-, chloropropyl-, disulfide-, epoxy-, epoxy/melamine-, mercapto-, methacrylate-, tertasulfido-, ureido-, vinyl-, isocynate-, and vinly-benzyl-amino-based silane coupling agents. Non-limiting examples of organometallic coupling agents include aryl- and vinyl-based organometallic coupling agents

Particles such as magnetic particles may be adsorbed or otherwise bound to at least some of the discontinuous agents. In some cases, the particles may coat some or all of the discontinuous agents and/or the continuous fibers. This may be facilitated by a coating of material as discussed above, although a coating is not necessarily required to facilitate the adsorption of the particles.

If the particles are magnetic, the particles may comprise any of a wide variety of magnetically susceptible materials. For example, the magnetic materials may comprise one or more ferromagnetic materials, e.g., containing iron, nickel, cobalt, alnico, oxides of iron, nickel, cobalt, rare earth metals, or an alloy including two or more of these and/or other suitable ferromagnetic materials. In some cases, the magnetic particles may have a relative permeability of at least 2, at least 5, at least 10, at least 20, at least 40, at least 100, at least 200, at least 500, at least 1,000, at least 2,000, at least 5,000, or at least 10,000.

However, it should be understood that not all of the particles are necessarily magnetic. In some cases, non-magnetic particles may be used, e.g., in addition to magnetic particles. Non-limiting examples of nonmagnetic particles include glass, polymer, metal, or the like.

The particles may be spherical or non-spherical, and may be of any suitable shape or size. The particles may be relatively monodisperse or come in a range of sizes. In some cases, the particles may have a characteristic dimension, on average, of at least 10 micrometers, at least 20 micrometers, at least 30 micrometers, at least 50 micrometers, at least 100 micrometers, at least 200 micrometers, at least 300 micrometers, at least 500 micrometers, at least 1 mm, at least 2 mm, at least 3 mm, at least 5 mm, at least 1 cm, at least 1.5 cm, at least 2 cm, at least 3 cm, at least 5 cm, at least 10 cm, etc. The particles within the composite may also have an average characteristic dimension of no more than 10 cm, no more than 5 cm, no more than 3 cm, no more than 2 cm, no more than 1.5 cm, no more than 1 cm, no more than 5 mm, no more than 3 mm, no more than 2 mm, no more than 1 mm, no more than 500 micrometers, no more than 300 micrometers, no more than 200 micrometers, no more than 100 micrometers, no more than 50 micrometers, no more than 30 micrometers, no more than 20 micrometers, no more than 10 micrometers, etc. Combinations of any of these are also possible. For example, the particles may exhibit a characteristic dimension of or between 100 micrometer and 1 mm, between 10 micrometer and 10 micrometer, etc. The characteristic dimension of a nonspherical particle may be taken as the diameter of a perfect sphere having the same volume as the nonspherical particle.

In some embodiments, the particles (including magnetic and/or non-magnetic particles) may comprise a relatively large portion of the composite. For example, in certain embodiments, the particles may comprise at least 1%, at least 2%, at least 3%, at least 4%, at least 5%, at least 7%, at least 10%, at least 15%, at least 20%, at least 25%, at least 30%, at least 35%, at least 40%, at least 45%, at least 50%, at least 55%, at least 60%, at least 65%, at least 70%, at least 75%, at least 80%, at least 85%, at least 90%, at least 95%, or at least 97% of the volume of the composite. In some cases, the particles comprise no more than 97%, no more than 95%, no more than 90%, no more than 85%, no more than 80%, no more than 70%, no more than 60%, no more than 50%, no more than 45%, no more than 40%, no more than 35% no more than 30%, no more than 25%, no more than 20%, no more than 15%, no more than 10%, no more than 7%, no more than 5%, no more than 4%, no more than 3%, no more than 2%, or no more than 1% of the volume of the composite. Combinations of any of these are also possible.

In certain embodiments, a binder is also present within the composite, e.g., which may be used to bind the continuous fibers and the discontinuous agents, e.g., within the composite. For example, the binder may facilitate holding the continuous fibers and the discontinuous agents in position within the composite. However, it should be understood that the binder is optional and not required in all cases. In some cases, the binder may comprise a resin. The binder may include a thermoset or a thermoplastic. In certain embodiments, the binder may comprise a thermoplastic solution, a thermoplastic melt, thermoplastic pellets, a thermoset resin, a volatile compound such as a volatile organic compound, water, or an oil. Additional non-limiting examples of binders include an epoxy, polyester, vinyl ester, polyethylenimine, polyetherketoneketone, polyaryletherketone, polyether ether ketone, polyphenylene sulfide, polyethylene terephthalate, a polycarbonates, poly(methyl methacrylate), acrylonitrile butadiene styrene, polyacrylonitrile, polypropylene, polyethylene, nylon, a silicone rubber, polyvinylidene fluoride, styrene butadiene rubber, or a pre-ceramic monomer, such as a siloxane, a silazane, or a carbosilane. The binder may also include mixtures including any one or more of these materials and/or other materials, in certain embodiments.

In some embodiments, the binder may comprise at least 1%, at least 2%, at least 3%, at least 4%, at least 5%, at least 7%, at least 10%, at least 15%, at least 20%, or at least 25% of the mass of the composite, and/or no more than 25%, no more than 20%, no more than 15%, no more than 10%, no more than 7%, no more than 5%, no more than 4%, no more than 3%, no more than 2%, or no more than 1% of the mass of the composite. According to the claimed invention, composites are prepared from a liquid, such as a slurry, containing a plurality of discontinuous agents and a plurality of magnetic particles, to which a suitable substrate is exposed to. The discontinuous agents can include fibers, platelets, or the like, e.g., as discussed herein. A magnetic field can be applied to manipulate the magnetic particles and the discontinuous agents, for example, to move the magnetic particles into the substrate, and/or to align the discontinuous agents. Excess material can be removed. In some cases, the composite can be set or hardened, e.g., with a binder, which may be used to immobilize or fix the discontinuous agents within the substrate. The binder may, in certain embodiments, be infused or impregnated into the substrate.

In some cases, a liquid, such as a slurry, may be formed. The slurry may include discontinuous agents and magnetic particles. The liquid phase may include, for example, a thermoplastic or a thermoset, e.g., a thermoplastic solution, thermoplastic melt, thermoset, volatile organic compound, water, or oil. Non-limiting examples of thermosets include polyethylenimine, polyetherketoneketone, polyaryletherketone, polyether ether ketone, polyphenylene sulfide, polyethylene terephthalate, a polycarbonates, poly(methyl methacrylate), acrylonitrile butadiene styrene, polyacrylonitrile, polypropylene, polyethylene, nylon, polyvinylidene fluoride, phenolics, epoxies, bismaleimides, cyanate esters, polyimides, etc. Non-limiting examples of elastomers include silicone rubber and styrene

butadiene rubber, etc.. Non-limiting examples of thermoplastics include epoxy, polyester, vinyl ester, polycarbonates, polyamides (e.g., nylon, PA-6, PA-12, etc.), polyphenylene sulfide, polyetherimide, polyetheretherketone, polyetherketoneketone, etc. Non-limiting examples of ceramic monomers include a siloxane, a silazane, or a carbosilane, etc. In some cases, for example, one or more of these may be added to assist in homogenously dispersing the discontinuous agents and/or magnetic particles within the liquid. Examples of volatile organic compounds include, but are not limited to, isopropanol, butanol, ethanol, acetone, toluene, or xylenes.

In some cases, the magnetic particles may be adsorbed or otherwise bound to the discontinuous agents within the liquid. As non-limiting examples, the magnetic particles may be added to the discontinuous agents prior to introduction into the liquid, or the discontinuous agents and magnetic particles may be separately added to the liquid and at least some of the magnetic particles may spontaneously adsorb onto the discontinuous agents.

Any suitable amount of discontinuous agents and/or magnetic particles may be present in the slurry or other liquid. For instance, at least 10%, at least 15%, at least 20%, at least 25%, at least 30%, at least 35%, at least 40%, at least 45%, at least 50%, at least 55%, at least 60%, at least 65%, at least 70%, at least 75%, or at least 80% of the volume of the slurry may be discontinuous agents and/or magnetic particles. In some cases, no more than 85%, no more than 80%, no more than 75%, no more than 70%, no more than 65%, no more than 60%, no more than 55%, no more than 50%, no more than 45%, no more than 40%, no more than 35%, no more than 30%, no more than 25%, no more than 20%, no more than 15%, or no more than 10% may be discontinuous agents and/or magnetic particles. Combinations of any of these are also possible in some cases. For example, a slurry or other liquid may contain between 70% and 80%, between 75% and 85%, between 50% and 90%, etc. discontinuous agents and/or magnetic particles.

After preparation of the slurry or other liquid, it may be applied to or exposed to the substrate, e.g., comprising the continuous fibers. In some cases, the substrate may be placed on a surface such as a polymer foil, metal foil, or paper, e.g., for application of liquid, a magnetic field, mechanical vibration, heating, and/or the like, e.g., as discussed herein.

Any suitable method may be used to apply the slurry or other liquid to the substrate. As non-limiting examples, the liquid may be poured, coated, sprayed, or painted onto the substrate, or the substrate may be immersed partially or completely within the liquid. The liquid may be used to wet, coat, and/or surround the continuous fibers.

A magnetic field may be applied to manipulate the magnetic particles. Without wishing to be bound by any theory, it is believed that the magnetic field may also be used to manipulate the discontinuous agents, e.g., due to the magnetic particles that are adsorbed or otherwise bound to the discontinuous agents. For instance, the magnetic field may be used to move the magnetic particles into the substrate, e.g., into pores or holes within the substrate. In addition, in some cases, the magnetic field may be used to at least substantially align the discontinuous agents within the substrate, e.g., as discussed herein. For example, the magnetic field may be used to align at least 50%, at least 75%, at least 85%, at least 90%, or at least 95% of the discontinuous agents to within 20°, within 15 °, within 10 °, or within 5 ° of the average alignment. The magnetic field, in some embodiments, may be used to align the magnetic particles and/or the discontinuous agents within the substrate, e.g., in the direction of the magnetic field, and/or within the substrate in a through-plane direction.

Any suitable magnetic field may be applied. In some cases, the magnetic field is a constant magnetic field. In other cases, the magnetic field may be time-varying; for example, the magnetic field may oscillate or periodically change in amplitude and/or direction, e.g., to facilitate manipulation of the discontinuous agents. The oscillation may be sinusoidal or another repeating waveform (e.g., square wave or sawtooth). The frequency may be, for example, at least 0.1 Hz, at least 0.3 Hz, at least 0.5 Hz, at least 1 Hz, at least 3 Hz, at least 5 Hz, at least 10 Hz, at least 30 Hz, at least 50 Hz, at least 100 Hz, at least 300 Hz, at least 500 Hz, etc., and/or no more than 1000 Hz, no more than 500 Hz, no more than 300 Hz, no more than 100 Hz, no more than 50 Hz, no more than 30 Hz, no more than 10 Hz, no more than 5 Hz, no more than 3 Hz, etc. For example, the frequency may be between 1 Hz to 500 Hz, between 10 Hz and 30 Hz, between 50 Hz and Hz, or the like. In addition, the frequency may be held substantially constant, or the frequency may vary in some cases.

The magnetic field, whether constant or oscillating, may have any suitable amplitude. For example, the amplitude may be at least 0.001 T, at least 0.003 T, at least 0.005 T, at least 0.01 T, at least 0.03 T, at least 0.05 T, at least 0.1 T, at least 0.3 T, at least 0.5 T, at least 1 T, at least 3 T, at least 5 T, at least 10 T, etc. The amplitude in some cases may be no more than 20 T, no more than 10 T, no more than 5 T, no more than 3 T, no more than 1 T, no more than 0.5 T, no more than 0.3 T, no more than 0.1 T, no more than 0.05 T, no more than 0.03 T, no more than 0.01 T, no more than 0.005 T, no more than 0.003 T, etc. The amplitude may also fall within any combination of these values. For instance, the amplitude may be between 0.01 T to 10 T, between 1 T and 3 T, between 0.5 T and 1 T, or the like. The amplitude may be substantially constant, or may vary in certain embodiments, e.g., within any range of these values.

In some embodiments, the magnetic field direction (i.e., direction of maximum amplitude) may vary by +/- 90°, +/- 85°, +/- 80°, +/-75°, +/-70°, +/-65°, +/-60°, +/-55°, +/-50°, +/-45°, +/-40°, +/-35°, +/-30°, +/-25°, +/-20°, +/-15°, +/-10°, +/-5° about a mean direction.

A variety of different devices for producing suitable magnetic fields may be obtained commercially, and include permanent magnets or electromagnets. In some cases, an oscillating magnetic may be created by attaching a magnet to a rotating disc and rotating the disc at an appropriate speed or frequency. Non-limiting examples of permanent magnets include iron magnets, alnico magnets, rare earth magnets, or the like.

In addition, in one set of embodiments, mechanical vibration may be used to manipulate the particles, e.g., in addition to and/or instead of magnetic manipulation. For example, mechanical vibration can be used to move particles into the substrate, e.g., into pores or holes within the substrate, and/or at least substantially align the discontinuous agents within the substrate, e.g., as discussed herein. In some cases, vibration may be used to align the particles within the substrate and/or move the particles into holes or pores within the substrate, which may be used, for example, to correspondingly manipulate the discontinuous agents and/or eliminate voids.

In one set of embodiments, mechanical vibration may be applied to cause motion of the particles and/or discontinuous agents of at least 1 micrometer, at least 2 micrometers, at least 3 micrometers, at least 5 micrometers, at least 10 micrometers, at least 20 micrometers, at least 30 micrometers, at least 50 micrometers, at least 100 micrometers, at least 200 micrometers, at least 300 micrometers, at least 500 micrometers, at least 1,000 micrometers, at least 2,000 micrometers, at least 3,000 micrometers, at least 5,000 micrometers, or at least 10,000 micrometers.

In addition, in some cases, the mechanical vibrations may be time-varying; for example, the mechanical vibrations may periodically change in amplitude and/or direction, e.g., to facilitate manipulation of the discontinuous agents. The oscillation may be sinusoidal or another repeating waveform (e.g., square wave or sawtooth). The frequency may be, for example, at least 0.1 Hz, at least 0.3 Hz, at least 0.5 Hz, at least 1 Hz, at least 3 Hz, at least 5 Hz, at least 10 Hz, at least 30 Hz, at least 50 Hz, at least 100 Hz, at least 300 Hz, at least 500 Hz, etc., and/or no more than 1000 Hz, no more than 500 Hz, no more than 300 Hz, no more than 100 Hz, no more than 50 Hz, no more than 30 Hz, no more than 10 Hz, no more than 5 Hz, no more than 3 Hz, etc. For example, the frequency may be between 1 Hz to 500 Hz, between 10 Hz and 30 Hz, between 50 Hz and Hz, or the like. In addition, the frequency may be held substantially constant, or the frequency may vary in some cases. If applied in conjunction with an oscillating magnetic field, their frequencies may independently be the same or different.

During and/or after alignment, the discontinuous agents within the substrate may be set or fixed in some embodiments, e.g., to prevent or limit subsequent movement of the discontinuous agents and form a relatively hard composite. Non-limiting examples of techniques to form the composite include, but are not limited to solidifying, hardening, gelling, melting, evaporating, freezing, or lyophilizing the liquid or the slurry. In another set of embodiments, a material, such as a thermosetting polymer, may be cured to harden the composite. The substrate may thus form a composite that is a solid, a gel, or the like.

In some cases, the liquid may comprise a relatively volatile solvent, which can be removed by heating and/or evaporation (e.g., by waiting a suitable amount of time, or allowing the solvent to evaporate, e.g., in a fume hood or other ventilated area). Non-limiting examples of volatile solvents include isopropanol, butanol, ethanol, acetone, toluene, or xylenes. Other examples of methods of removing solvents include applying vacuum, lyophilization, mechanical shaking, or the like.

In one set of embodiments, heating may be applied to the substrate, for example, to remove a portion of the solvent. For example, the substrate may be heated to a temperature of at least about 30 °C, at least about 35 °C, at least about 40 °C, at least about 45 °C, at least about 50 °C, at least about 55 °C, at least about 60 °C, at least about 65 °C, at least about 70 °C, at least about 75 °C, at least about 80 °C, at least about 90 °C, at least about 100 °C, at least about 125 °C, at least about 150 °C, at least about 175 °C, at least about 200 °C, at least about 250 °C, at least about 300 °C, at least about 350 °C, at least about 400 °C, at least about 450 °C, at least about 500 °C, etc. Any suitable method of applying heat may be used, for example, a thermoelectric transducer, an Ohmic heater, a Peltier device, a combustion heater, or the like. In some cases, the viscosity of the liquid may decrease as a result of heating. The heating may be applied, for example, prior, concurrent or subsequent to the application of magnetic field and/or mechanical vibration. In some cases, heating may be used to prevent or initiate cross-linking or curing of a thermosetting prepolymer.

A binder may also be applied in one set of embodiments, e.g., before, during, and/or after hardening of the composite and/or removal of at least a portion of the liquid. In some embodiments, the binder may be used to produce a pre-impregnated composite ply material, e.g., by wetting dry ply material. The binder may be a liquid in some cases, and may be caused to harden after application to the composite. In some cases, the binder is permeated into at least a portion of the composite. Non-limiting examples of permeation techniques include using gravitational and capillary forces, by applying pressure to the binder to force it into the composite, or the like. Other examples include, but are not limited to, hot-pressing, calendaring, or vacuum infusion. However, in some cases, the binder is used to coat all, or only a portion of, the substrate, e.g., without necessarily requiring permeation. Non-limiting examples of suitable binders include resins or other materials such as those discussed herein.

After permeation, the binder may be hardened. In some cases, the binder may harden spontaneously, e.g., upon evaporation of a solvent. In certain embodiments, heat may be applied to harden the binder, e.g., by exposing the composite to temperatures such as those described above. In some embodiments, the binder may be hardened upon exposure to light or a catalyst, e.g., to facilitate or promote a chemical or polymerization reaction to cause the binder to polymerize. For example, a thermosetting polymer may be cured upon exposure to suitable temperatures. In another example, a polymer may be exposed to ultraviolet light to cause polymerization to occur.

Composites such as those discussed herein may be used in a wide variety of applications, in various aspects. Composites such as those described herein may exhibit a variety of different features in various embodiments of the invention.

For example, composites such as those discussed herein may be useful for reducing or eliminating stress concentrations, reducing or eliminating delamination, increasing planar strength and/or stiffness, reducing or eliminating surface wear, dissipating electricity (e.g., in electrical shocks), transmitting electrical signals, attenuating electromagnetic waves, transmitting electromagnetic waves, dissipating heat (e.g., in thermal shocks), reducing or eliminating thermal gradients, storing energy, synthesizing ex-PAN carbon fibers, synthesizing ceramic matrix composites (CMC), or the like.

For example, in one set of embodiments, a composite ply with at least three-axes of fiber orientation may be produced. This fiber structure may allow the composite ply to distribute stresses between subsequent plies and adjacent components, which may reduce or eliminate stress concentrations. This may significantly improve the strength of a laminated composite structure under dynamic loads, e.g., when a laminated composite structure is formed with small features or mates with a material with drastically different stiffness (e.g. metal alloys or plastics).

Another set of embodiments is generally directed to a composite ply with through-plane reinforcement of the interlaminar region. This fiber reinforcement allows the composite ply to efficiently distribute stresses between adjacent layers to hinder the formation of cracks and prevents a crack from propagating in the interlaminar region. The targeted reinforcement of the interlaminar region can significantly improve the strength of a laminated composite structure under shock and cyclic loads. This formulation may be useful when a laminated composite structure is formed with long sheets of composite ply, for example, where a single crack in the interlaminar region between the plies can potentially compromise the structural integrity of the overall structure.

Yet another set of embodiments is generally directed to a composite ply with through-plane reinforcement, e.g., a through-plane uni-directional fabric. This fiber reinforcement may reinforce target through-plane loads (e.g. point loads and high-pressure loads). The targeted through-plane reinforcement can significantly improve the strength and stiffness of a laminated composite structure under expected through-plane mechanical loads. This may be useful for effectively handling a composite ply with through-plane reinforcement that can easily deform during handling in an un-cured state while forming an exterior shell for a laminated composite structure.

Still another set of embodiments is generally directed to a composite ply with through-plane oriented particles with hardness and/or chemical stability. In some cases, the through-plane reinforcement can significantly improve the polymer matrix's resistance to damage from mechanical wear (e.g. abrasion) and/or chemical corrosion (e.g. oxidization). This formulation may be useful, for example, for forming surfaces that protect structures from mechanical and chemical wear.

In one set of embodiments, a composite ply is provided having enhanced through-plane electrical conductivity. This can significantly improve the resistance to damage caused by localized heat generation induced by charge accumulation upon rapid discharge of electrical energy (e.g. lightning). This formulation is particularly useful for forming surfaces that protect structures from damage from electrical discharge. In another set of embodiments, a composite ply with enhanced near-isotropic electrical conductivity is provided. This may effectively conduct electrical signals. In yet another set of embodiments, a composite ply is provided with enhanced isotropic electrical conductivity. This material may effectively attenuate incident electromagnetic waves. In still another set of embodiments, a composite ply is provide having low radio-frequency interference and enhanced through-plane thermal conductivity to effectively transmit electromagnetic waves without overheating.

Another set of embodiments is generally directed to a composite ply with enhanced through-plane thermal conductivity for sufficient structural integrity under heating. This may be useful in some embodiments for increasing structural integrity under rapid temperature fluctuations. Still another set of embodiments is generally directed to a composite ply with through-plane thermal conductivity and low electrical conductivity. This formulation may be useful for effectively moving and distributing heat flux, e.g., in electronics.

Yet another set of embodiments is generally directed to a carbon-based composite ply with through-plane electrical conductivity. This may be useful for adsorbing ionic species from an electrolyte and efficiently distributing electrical charge.

One set of embodiments is generally directed to a composite ply with through-plane carbon fiber catalysts. At appropriate temperatures, a PAN (polyacrylonitrile) matrix may be oxidized and carbonized to form a carbon matrix. Another set of embodiments is generally directed to a composite ply with through-plane carbon fiber or silicon carbide catalysts. At appropriate temperatures, the polymer matrix may be oxidized to form a ceramic matrix.

The following examples are intended to illustrate certain embodiments of the present invention, but do not exemplify the full scope of the invention.

### EXAMPLE 1

Fiber-reinforced composites (e.g. carbon fiber composites) are typically constructed with continuous fibers that are bundled into tows, assembled into woven or non-woven fabrics, and encased in a resin matrix. Specifically, carbon fiber composites formed into layers or plies offer exceptional strength in the direction of the strong-axis of the carbon fibers (e.g. in-plane) but are drastically weaker when loads are applied perpendicular to the fibers (e.g. through-plane). While, these composite plies are laminated to create a structure with excellent bulk in-plane properties, the lack of through-thickness reinforcement makes the laminated composite structure especially prone to interlaminar micro-cracks and through-ply fissures. These cracks and fissures degrade the integrity of the component and can eventually result in the delamination and catastrophic failure of the carbon fiber composite structure.

### EXAMPLE 2

This prophetic example illustrates a solvent dispersion method useful for making a composite according to certain embodiments of the invention. Magnetized particles (e.g. discontinuous fibers of carbon, basalt, silicon carbide, silicon nitride, aramid, zirconia, nylon, boron, alumina, silica, borosilicate, or mullite or platelets of alumina, boron nitride, or graphite with at least one long axis less than 1 millimeter) can be dispersed in a liquid-phase solvent of volatile organic compound (e.g. isopropanol, butanol, ethanol, acetone, toluene, or xylenes), and/or water to form a slurry. The magnetized particles account for at most 85 percent by volume of the slurry in this example.

The slurry is deposited onto a woven (e.g. bi-directional, multi-directional, or quasi-isotropic) or non-woven (e.g., uni-directional, veil, or mat) fabric of carbon, basalt, silicon carbide, aramid, zirconia, nylon, boron, alumina, silica, borosilicate, mullite, cotton, or any natural or synthetic long-fibers. The slurry wets, coats, and/or surrounds the continuous fibers of the fabric.

The fabric containing the slurry is then exposed to a magnetic field of at most 10 teslas in field strength in this example. The magnetic field aligns the magnetized particles within the fabric in the direction of the magnetic field. After alignment, the fabric is heated to evaporate the bulk solvent of the slurry, resulting in dry ply material with through-plane aligned particles embedding and/or coating the fabric.

Subsequently, the dry ply material is coated with a liquid-phase binder (e.g. epoxy, polyester, vinyl ester, polyethylenimine, polyetherketoneketone, polyaryletherketone, polyether ether ketone, polyphenylene sulfide, polyethylene terephthalate, polycarbonates, poly(methyl methacrylate), acrylonitrile butadiene styrene, polyacrylonitrile, polypropylene, polyethylene, nylon, silicone rubbers, polyvinylidene fluoride, styrene butadiene rubber, or pre-ceramic polymer). The liquid-phase binder effectively wets the dry ply material to produce a pre-impregnated composite ply material.

This process may result in a high aligned particle content (up to 85 percent of total composite ply volume). Additionally, the solvent of the slurry can be removed prior to application of the liquid-phase binder, which may avoid issues with chemical incompatibility between the binder and the solvent. In some cases, this process may be useful for certain types of precursor dry ply material that is weak and brittle prior to the application of the liquid-phase binder.

### EXAMPLE 3

This prophetic example illustrates a resin dispersion method useful for making a composite according to certain embodiments of the invention. Magnetized particles (e.g. discontinuous fibers of carbon, basalt, silicon carbide, silicon nitride, aramid, zirconia, nylon, boron, alumina, silica, borosilicate, or mullite or platelets of alumina, boron nitride, or graphite with at least one long axis less than 1 millimeter) are dispersed in a liquid-phase binder (e.g. epoxy, polyester, vinyl ester, polyethylenimine, polyetherketoneketone, polyaryletherketone, polyether ether ketone, polyphenylene sulfide, polyethylene terephthalate, polycarbonates, poly(methyl methacrylate), acrylonitrile butadiene styrene, polyacrylonitrile, polypropylene, high-density polyethylene, nylon, silicone rubbers, polyvinylidene fluoride, styrene butadiene rubber, or pre-ceramic polymer). The magnetized particles account for at most 80 percent by volume of the slurry in this example.

For slurries with magnetic particle content exceeding 10 percent by volume of the slurry, an additional solvent thinner comprised of liquid-phase of volatile organic compound (e.g. isopropanol, butanol, ethanol, acetone, toluene, or xylenes), oil and/or water can be introduced to the slurry to assist in homogenously dispersing the magnetized particles into the liquid-phase binder.

The slurry is deposited onto a woven (e.g. bi-directional, multi-directional, or quasi-isotropic) or non-woven (e.g., uni-directional, veil, or mat) fabric of carbon, basalt, silicon carbide, aramid, zirconia, nylon, boron, alumina, silica, borosilicate, mullite, cotton, or any natural or synthetic long-fibers. The slurry wets, coats, and surrounds the continuous fibers of the fabric.

The fabric containing the slurry is then exposed to a magnetic field of at most 10 teslas in field strength in this example. The magnetic field aligns the magnetized particles within the fabric in the through-plane direction.

During and/or after alignment, the fabric is heated to evaporate the bulk solvent thinner, resulting in a composite ply material with a liquid-phase binder. The composite ply material is either further heated or cooled to consolidate the composite ply material by solidifying, hardening, gelling, or freezing the liquid-phase binder to produce a pre-impregnated composite ply material.

This process may result in a low aligned particle content (up to 20 percent of total composite ply volume). Additionally, the lack of a solvent during processing of low particle loading slurries may allow streamlined manufacturing with minimal solvent fume management and lower emissions. A solvent thinner may be used to disperse particles into the liquid-phase binder. This process also may use heating of the produced material after the liquid-phase binder has been added to remove the solvent.

### EXAMPLE 4

This prophetic example illustrates various formulations for eliminating or reducing stress concentrations. Particles (e.g. discontinuous fibers of carbon, borosilicate, or nylon with at least one long axis less than 1 millimeter) coat and/or embed a woven (e.g. bi-directional, multi-directional, or quasi-isotropic) fabric comprised of carbon, borosilicate, or nylon and embedded in a matrix of epoxy, polyester, vinyl ester, polyether ether ketone (PEEK), acrylonitrile butadiene styrene (ABS), high-density polyethylene (HDPE), or nylon. The particles are transversely oriented to the continuous fibers of the fabric.

This formulation may be used to provide a composite ply with at least three axes of fiber orientation. This fiber structure allows the composite ply to efficiently distribute stresses between subsequent plies and adjacent components, which may reduce or eliminate the accumulations of stress concentrations. The reduction or elimination of stress concentrations can significantly improve the strength of a laminated composite structure under dynamic loads. This formulation may be useful when a laminated composite structure is formed with small features or mates with a material with drastically different stiffness (e.g. metal alloys or plastics). Example applications include dome reinforcement for Type III, IV, and V pressure vessels, wing tips and trailing/leading edges for wind turbines, hydrofoils for marine vehicles, aerodynamic winglets for automobiles, and aerostructure bolt/rivet fastener attachments for aircrafts.

### EXAMPLE 5

This prophetic example illustrates various formulations for eliminating or reducing delamination. Particles (e.g. discontinuous fibers of carbon, borosilicate, or nylon with at least one long axis less than 1 millimeter) coat and/or embed a non-woven (e.g. uni-directional, veil, or mat) fabric comprised of carbon, borosilicate, or nylon and embedded in a matrix of epoxy, polyester, vinyl ester, polyether ether ketone (PEEK), acrylonitrile butadiene styrene (ABS), high-density polyethylene (HDPE), or nylon. The particles are transversely oriented to the continuous fibers of the fabric.

This formulation may provide a composite ply with through-plane reinforcement of the interlaminar region. This fiber reinforcement allows the composite ply to efficiently distribute stresses between adjacent layers to hinder the formation of cracks and prevents a crack from propagating in the interlaminar region. The targeted reinforcement of the interlaminar region can significantly improve the strength of a laminated composite structure under shock and cyclic loads. This formulation may be useful when a laminated composite structure is formed with long sheets of composite ply, for example, where a single crack in the interlaminar region between the plies can compromise the structural integrity of the overall structure. Example applications include over-wraps for Type III, IV, and V pressure vessels, spars for wind turbines, hulls for marine vehicles, chassis panels for automobiles, and wings, and turbine fan blades for aircrafts.

### EXAMPLE 6

This prophetic example illustrates various formulations for through-plane strength and stiffness. Particles (e.g. discontinuous fibers of carbon or borosilicate with at least one long axis less than 1 millimeter) coat and/or embed a woven (e.g. bi-directional scrim) fabric comprised of borosilicate or nylon and embedded in a matrix of epoxy, polyester, vinyl ester, polyether ether ketone (PEEK), acrylonitrile butadiene styrene (ABS), high-density polyethylene (HDPE), or nylon. The particles comprise over 50 percent by volume of the overall composite and are transversely oriented to the continuous fibers of the fabric in this example.

This formulation provides a composite ply with through-plane reinforcement, e.g., as a through-plane uni-directional fabric. This fiber reinforcement targets through-plane loads (e.g. point loads and high-pressure loads) and the scrim fabric offers minimal in-plane reinforcement. The targeted through-plane reinforcement can significantly improve the strength and stiffness of a laminated composite structure under expected through-plane mechanical loads.

This formulation may be useful for effectively handling a composite ply with through-plane reinforcement that can easily deform during handling in an un-cured state while forming an exterior shell for a laminated composite structure. Example applications include repairs to the interior features of tooling for injection molding, shims used in jacking heavy structures, and surfaces of bats and sticks for sports.

### EXAMPLE 7

This prophetic example illustrates various formulations for eliminating or reducing surface wear. Particles (e.g. discontinuous fibers of silicon carbide, silicon nitride, zirconia, boron, alumina, silica, or micro-platelets of alumina, boron nitride with at least one long axis less than 1 millimeter) coat and/or embed a woven (e.g. bi-directional, multi-directional, or quasi-isotropic) fabric comprised of carbon, borosilicate, or nylon and embedded in a matrix of epoxy, polyester, vinyl ester, polyether ether ketone (PEEK), acrylonitrile butadiene styrene (ABS), high-density polyethylene (HDPE), or nylon. The particles are transversely oriented to the continuous fibers of the fabric.

This formulation provides a composite ply with through-plane oriented particles with excellent hardness and/or chemical stability. The through-plane reinforcement can significantly improve the polymer matrix's resistance to damage from mechanical wear (e.g. abrasion) and/or chemical corrosion (e.g. oxidization). This formulation may be useful for forming surfaces that protect structures from mechanical and chemical wear. Example applications include Class A surfaces for automobiles, skins for aircrafts, and panels for buildings.

### EXAMPLE 8

This prophetic example illustrates various formulations for dissipating electrical shocks. Particles (e.g. discontinuous fibers of carbon or micro-platelets of graphite with at least one long axis less than 1 millimeter) coat and/or embed a woven (e.g. bi-directional, multi-directional, or quasi-isotropic) fabric comprised of carbon and embedded in a matrix of epoxy, polyester, vinyl ester, polyether ether ketone (PEEK), acrylonitrile butadiene styrene (ABS), high-density polyethylene (HDPE), or nylon. The particles are transversely oriented to the fibers of the fabric. The particles comprise over 50 percent by volume of the overall composite and are transversely oriented to the continuous fibers of the fabric.

This formulation provides a composite ply with enhanced through-plane electrical conductivity and can significantly improve the resistance to damage caused by localized heat generation induced by charge accumulation upon rapid discharge of electrical energy (e.g. lightning). This formulation may be useful for forming surfaces that protect structures from damage from electrical discharge. Example applications are skins and leading/trailing edges for aircrafts and wind turbines.

### EXAMPLE 9

This prophetic example illustrates various formulations for transmitting electrical signals. Particles (e.g. discontinuous fibers of carbon or micro-platelets of graphite with at least one long axis less than 1 millimeter) coat and/or embed a non-woven (e.g. uni-directional, veil, or mat) fabric comprised of carbon and embedded in a matrix of epoxy, polyester, vinyl ester, polyether ether ketone (PEEK), acrylonitrile butadiene styrene (ABS), high-density polyethylene (HDPE), or nylon. The particles are transversely oriented to the continuous fibers of the fabric.

This formulation provides a composite ply with enhanced near-isotropic electrical conductivity and can effectively conduct electrical signals across long and through thick composite structures. Example applications are aircraft and wind turbine de-icing systems that implement ohmic heating to prevent accumulation of ice and composite health monitoring systems that implement electrical signals to detect delamination within thick and/or long laminated composite structures.

### EXAMPLE 10

This prophetic example illustrates various formulations for attenuating electromagnetic waves. Particles (e.g. discontinuous fibers of carbon or micro-platelets of graphite with at least one long axis less than 1 millimeter) coat and/or embed a woven (e.g. bi-directional, multi-directional, or quasi-isotropic) fabric comprised of carbon and embedded in a matrix of epoxy, polyester, vinyl ester, polyether ether ketone (PEEK), acrylonitrile butadiene styrene (ABS), high-density polyethylene (HDPE), or nylon. The particles are transversely oriented to the continuous fibers of the fabric.

This formulation provides a composite ply with enhanced isotropic electrical conductivity and can effectively attenuate incident electromagnetic waves. Example applications are skins for aircrafts that absorb radar signals for stealth.

### EXAMPLE 11

This prophetic example illustrates various formulations for transmitting electromagnetic waves. Particles (e.g. micro-platelets of alumina or boron nitride with at least one long axis less than 1 millimeter) coat and/or embed a woven (e.g. bi-directional, multi-directional, or quasi-isotropic) fabric comprised of borosilicate and embedded in a matrix of polypropylene (PP) and polyethylene (PE). The particles are transversely oriented to the continuous fibers of the fabric.

This formulation provides a composite ply with low radio-frequency interference and enhanced through-plane thermal conductivity to effectively transmit electromagnetic waves without overheating. Example applications include radomes for telecommunications.

### EXAMPLE 12

This prophetic example illustrates various formulations for dissipating thermal shocks. Particles (e.g. e.g. discontinuous fibers of carbon, silicon carbide, silicon nitride, alumina, or micro-platelets of alumina, boron nitride, or graphite with at least one long axis less than 1 millimeter) coat and/or embed a woven (e.g. bi-directional, multi-directional, or quasi-isotropic) fabric comprised of carbon and embedded in a matrix of epoxy, polyester, vinyl ester, polyether ether ketone (PEEK), acrylonitrile butadiene styrene (ABS), polypropylene (PP), polyethylene (PE), nylon. The particles are transversely oriented to the continuous fibers of the fabric.

This formulation provides a composite ply with enhanced through-plane thermal conductivity sufficient structural integrity. This formulation may be useful to increase structural integrity under rapid temperature fluctuations. Example applications are skins for spacecraft during atmospheric re-entry and brake discs for vehicles.

### EXAMPLE 13

This prophetic example illustrates various formulations for eliminating or reducing thermal gradients. Particles (e.g. e.g. micro-platelets of alumina or boron nitride with at least one long axis less than 1 millimeter) coat and/or embed a woven (e.g. bi-directional, multi-directional, or quasi-isotropic) fabric comprised of carbon and embedded in a matrix of epoxy, polyester, vinyl ester, polyether ether ketone (PEEK), acrylonitrile butadiene styrene (ABS), high-density polyethylene (HDPE), nylon, or silicone rubbers. The particles are transversely oriented to the continuous fibers of the fabric. The particles comprise over 50 percent by volume of the overall composite

This formulation provides a composite ply with excellent through-plane thermal conductivity and low electrical conductivity. This formulation may be useful for effectively moving and distributing heat flux, e.g., in electronics. Example applications include printed circuit board laminates, gap fillers, and encapsulants for electronic devices.

### EXAMPLE 14

This prophetic example illustrates various formulations for energy storage. Particles (e.g. discontinuous fibers of carbon or micro-platelets of graphite with at least one long axis less than 1 millimeter) coat and/or embed a non-woven (e.g. uni-directional, veil, or mat) fabric comprised of carbon embedded in a matrix of polyvinylidene fluoride (PVDF) or styrene butadiene rubber (SBR). The particles are transversely oriented to the continuous fibers of the fabric. The particles comprise over 50 percent by volume of the overall composite.

This formulation provides a carbon-based composite ply with excellent through-plane electrical conductivity. This formulation may be useful for adsorbing ionic species from an electrolyte and/or efficiently distributing electrical charge. Example applications include anodes for electrochemical batteries (e.g. lithium-ion and sodium-ion cells) and electrodes for supercapacitors.

### EXAMPLE 15

This prophetic example illustrates formulations for ex-PAN carbon fiber synthesis. Particles (e.g. discontinuous fibers of carbon with at least one long axis less than 1 millimeter) coat and/or embed a fabric comprised of carbon embedded in a matrix of polyacrylonitrile (PAN). The particles are transversely oriented to the continuous fibers of the fabric.

This formulation provides a precursory composite ply with through-plane carbon fiber catalysts. At appropriate temperatures, the PAN matrix may oxidize and carbonize into a carbon matrix. This formulation may be useful for creating ex-PAN carbon-carbon composites with isotropic grains.

### EXAMPLE 16

This prophetic example illustrates formulations for ceramic matrix composites (CMCs). Particles (e.g. discontinuous fibers of carbon and silicon carbide with at least one long axis less than 1 millimeter) coat and/or embed a fabric comprised of carbon or silicon carbide embedded in a matrix of preceramic monomers (e.g. siloxane, silazane, or carbosilane) with thiol, vinyl, acrylate, methacrylate, or epoxy R-groups. The particles are transversely oriented to the fibers of the fabric.

This formulation may provide a precursory composite ply with through-plane carbon fiber or silicon carbide catalysts. At appropriate temperatures, the polymer matrix can oxidize into a ceramic matrix. This formulation may be useful for creating ceramic matrix composites with isotropic grains.

While several embodiments of the present invention have been described and illustrated herein, those of ordinary skill in the art will readily envision a variety of other means and/or structures for performing the functions and/or obtaining the results and/or one or more of the advantages described herein, and each of such variations and/or modifications is deemed to be within the scope of the present invention defined by the appended claims.

More generally, those skilled in the art will readily appreciate that all parameters, dimensions, materials, and configurations described herein are meant to be exemplary and that the actual parameters, dimensions, materials, and/or configurations will depend upon the specific application or applications for which the teachings of the present invention is/are used. Those skilled in the art will recognize, or be able to ascertain using no more than routine experimentation, many equivalents to the specific embodiments of the invention described herein. It is, therefore, to be understood that the foregoing embodiments are presented by way of example only and that, within the scope of the appended claims and equivalents thereto, the invention may be practiced otherwise than as specifically described.

All definitions, as defined and used herein, should be understood to control over dictionary definitions and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

When the word "about" is used herein in reference to a number, it should be understood that still another embodiment of the invention includes that number not modified by the presence of the word "about."

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases.

## Claims

1. An article, comprising:
a composite comprising a plurality of continuous fibers defining a substrate, and a plurality of discontinuous agents contained within at least a portion of the substrate such that the plurality of discontinuous agents comprises at least 40% of the mass of the composite, wherein:
at least some of the plurality of discontinuous agents have a plurality of magnetic particles adsorbed thereto; and
at least some of the discontinuous agents comprise discontinuous fibers, wherein the discontinuous fibers have an average diameter of between 10 micrometers and 100 micrometers.

2. The article of claim 1, wherein the plurality of discontinuous agents are contained within and positioned substantially orthogonal to the substrate.

3. The article of any one of claims 1 or 2, wherein the plurality of continuous fibers:
(a) define a fabric; and/or
(b) define a tow; and/or
(c) define a filament, a yarn, a strand, a veil, or a mat; and/or
(d) are assembled together to define the substrate; and/or
(e) are interwoven together to define the substrate, preferably wherein at least some of the plurality of woven continuous fibers are bi-directional and/or multi-directional and/or quasi-isotropic; and/or
wherein at least some of the plurality of continuous fibers:
(a) are not woven together; and/or
(b) are uni-directional; and/or
(c) comprise natural fibers; and/or
(d) comprise synthetic fibers; and/or
(e) comprise carbon, basalt, silicon carbide, aramid, zirconia, nylon, boron, alumina, silica, borosilicate, mullite, and/or cotton; and/or
(f) are substantially parallel; and/or
wherein the continuous fibers have an average length of at least 5 millimeters; and/or wherein the continuous fibers have an average diameter of between 10 micrometers and 100 micrometers; and/or
wherein the continuous fibers have an average aspect ratio of length to diameter that is greater than or equal to 100.

4. The article of any one of claims 1-3, wherein:
(a) the discontinuous fibers have an average length of less than 5 millimeters or have an average length of between 5 nm and 15 mm; and/or
(b) the plurality of discontinuous agents comprises no more than 97% by mass of the composite; and/or
(c) at least some of the plurality of discontinuous agents are randomly oriented; and/or
(d) at least some of the plurality of discontinuous agents are substantially aligned; and/or
(e) the discontinuous fibers have an average aspect ratio of length to diameter that is at least 5; and/or
(f) the discontinuous fibers have an average aspect ratio of length to diameter that is less than 100,000; and/or
(g) at least some of the discontinuous fibers have an average length that substantially spans the thickness of the substrate; and/or
(h) at least some of the discontinuous agents comprise platelets and/or ellipsoids, preferably wherein the platelets have a characteristic dimension of between 5 nm and 15 mm and/or a maximum dimension of less than 1 mm.

5. The article of any one of claims 1-4, wherein at least some of the discontinuous agents:
(a) comprise a natural material; and/or
(b) comprise a synthetic material; and/or
(c) comprise glass; and/or
(d) comprise carbon fibers; and/or
(e) are non-magnetic; and/or
(f) are magnetic; and/or
(g) comprise basalt, silicon carbide, silicon nitride, aramid, zirconia, nylon, boron, alumina, silica, borosilicate, mullite, boron nitride, and/or graphite; and/or
(h) are uncoated; and/or
(i) are coated with a coating, preferably wherein the coating comprises a surfactant, a silane coupling agent, epoxy, glycerine, polyurethane, and/or an organometallic coupling agent.

6. The article of any one of claims 1-5, wherein at least 1 vol% of the composite comprises the discontinuous agents, preferably at least 5 vol%, preferably at least 20 vol%, and/or wherein no more than 85 vol% of the composite comprises the discontinuous agents.

7. The article of any one of claims 1-6, wherein at least some of the magnetic particles comprise a ferromagnetic material, iron oxide, nickel oxide, cobalt oxide, or an alloy comprising a rare earth metal, and/or wherein the magnetic particles have an average diameter of less than 10 micrometers.

8. The article of any one of claims 1-7, wherein the composite further comprises a binder binding the plurality of continuous fibers and the plurality of discontinuous agents, preferably wherein the binder comprises:
(a) a resin; and/or
(b) a thermoplastic; and/or
(c) a thermoplastic melt; and/or
(d) a thermoplastic resin; and/or
(e) a thermoset; and/or
(f) a volatile compound; and/or
(g) an epoxy, polyester, vinyl ester, polyethylenimine, polyetherketoneketone, polyaryletherketone, polyether ether ketone, polyphenylene sulfide, polyethylene terephthalate, polycarbonates, poly(methyl methacrylate), acrylonitrile butadiene styrene, polyacrylonitrile, polypropylene, polyethylene, nylon, a silicone rubber, polyvinylidene fluoride, and/or styrene butadiene rubber; and/or
(h) a pre-ceramic monomer, preferably wherein the pre-ceramic monomer comprises a siloxane, a silazane, and/or a carbosilane.

9. A method, comprising:
providing a liquid comprising a plurality of discontinuous agents having a plurality of magnetic particles adsorbed thereto, wherein at least some of the discontinuous agents comprise discontinuous fibers, wherein the discontinuous fibers have an average diameter of between 10 micrometers and 100 micrometers;
exposing the liquid to a plurality of continuous fibers defining a substrate;
applying a magnetic field to the liquid to cause alignment of at least some of the plurality of discontinuous agents within the plurality of continuous fibers; and
hardening the liquid to form a composite comprising the substrate, such that the plurality of discontinuous agents comprises at least 40% of the mass of the composite.

10. The method of claim 9, wherein the liquid further comprises a solvent, and the method further comprises heating the liquid to remove at least some of the solvent, preferably an organic solvent, preferably wherein the liquid comprises:
(a) isopropanol, butanol, ethanol, acetone, toluene, and/or xylene; and/or
(b) a slurry; and/or
(c) a thermoset; and/or
(d) an oil; and/or
(e) water.

11. The method of any one of claims 9-10, wherein exposing the liquid to a plurality of continuous fibers comprises coating and/or immersing the plurality of continuous fibers with the liquid.

12. The method of any one of claims 9-11, wherein the magnetic field:
(a) has a minimum field strength of at least 0.01 T; and/or
(b) has a maximum field strength of no more than 10 T; and/or
(c) is a time-varying magnetic field, preferably wherein the time-varying magnetic field has a frequency of between 1 Hz and 500 Hz.

13. The method of any one of claims 9-12, wherein at least 5 vol% of the liquid comprises the discontinuous agents and/or no more than 85 vol% of the liquid comprises the discontinuous agents.

14. The method of any one of claims 9-13, wherein hardening the liquid to form a composite comprises:
(a) causing the liquid to gel; and/or
(b) evaporating at least a portion of the liquid; and/or
(c) freezing at least a portion of the liquid; and/or
(d) removing at least a portion of the liquid.

15. The method of any one of claims 9-14, further comprising permeating a binder into the composite, preferably:
(a) wherein at least some of the binder permeates into the composite via capillary action, preferably via gravity; and/or
(b) wherein permeating a binder into the composite comprises applying pressure to the binder to cause the binder to permeate into the composite, preferably wherein applying pressure comprises (i) hot-pressing the binder into the composite, and/or (ii) calendaring the binder into the composite, and/or (iii) permeating the binder into the composite using vacuum infusion; and/or
(c) further comprising causing the binder to harden; and/or
(d) wherein the binder comprises (i) a resin, and/or (ii) a thermoplastic, and/or (iii)a thermoplastic melt, and/or (d) a thermoplastic resin, and/or (e) a thermoset, and/or (f) a volatile compound; and/or
(e) further comprising heating the composite after permeating the binder into the composite.

## Patentansprüche

1. Artikel, umfassend:
einen Verbundstoff, umfassend eine Mehrzahl von Endlosfasern, die ein Substrat definieren, und eine Mehrzahl von diskontinuierlichen Mitteln, die in mindestens einem Teil des Substrats enthalten sind, so dass die Mehrzahl von diskontinuierlichen Mitteln mindestens 40% der Masse des Verbundstoffs umfasst, wobei:
mindestens einige der Mehrzahl von diskontinuierlichen Mitteln eine Mehrzahl von daran adsorbierten magnetischen Partikeln aufweisen; und
mindestens einige der diskontinuierlichen Mittel diskontinuierliche Fasern umfassen, wobei die diskontinuierlichen Fasern einen durchschnittlichen Durchmesser zwischen 10 Mikrometern und 100 Mikrometern aufweisen.

2. Artikel gemäß Anspruch 1, wobei die Mehrzahl der diskontinuierlichen Mittel in dem Substrat enthalten und im Wesentlichen orthogonal zu dem Substrat angeordnet sind.

3. Artikel gemäß einem der Ansprüche 1 oder 2, wobei die Mehrzahl von Endlosfasern:
(a) ein Gewebe definieren; und/oder
(b) ein Seil definieren; und/oder
(c) ein Filament, ein Garn, einen Strang, einen Schleier oder eine Matte definieren; und/oder
(d) zusammengefügt sind, um das Substrat zu definieren; und/oder
(e) miteinander verwoben sind, um das Substrat zu definieren, wobei bevorzugt mindestens einige der Mehrzahl der gewebten Endlosfasern bidirektional und/oder multidirektional und/oder quasi-isotrop sind; und/oder
wobei mindestens einige der Mehrzahl der Endlosfasern:
(a) nicht miteinander verwoben sind; und/oder
(b) unidirektional sind; und/oder
(c) Naturfasern umfassen; und/oder
(d) synthetische Fasern umfassen; und/oder
(e) Kohlenstoff, Basalt, Siliciumcarbid, Aramid, Zirconiumoxid, Nylon, Bor, Aluminiumoxid, Siliciumoxid, Borosilicat, Mullit und/oder Baumwolle umfassen; und/oder
(f) im Wesentlichen parallel sind; und/oder
wobei die Endlosfasern eine durchschnittliche Länge von mindestens 5 Millimetern aufweisen; und/oder wobei die Endlosfasern einen durchschnittlichen Durchmesser zwischen 10 Mikrometern und 100 Mikrometern aufweisen; und/oder
wobei die Endlosfasern ein durchschnittliches Seitenverhältnis von Länge zu Durchmesser aufweisen, das größer oder gleich 100 ist.

4. Artikel gemäß einem der Ansprüche 1-3, wobei:
(a) die diskontinuierlichen Fasern eine durchschnittliche Länge von weniger als 5 Millimetern oder eine durchschnittliche Länge zwischen 5 nm und 15 mm aufweisen; und/oder
(b) die Mehrzahl der diskontinuierlichen Mittel nicht mehr als 97 Massen-% des Verbundstoffs umfasst; und/oder
(c) mindestens einige der Mehrzahl der diskontinuierlichen Mittel zufällig orientiert sind; und/oder
(d) mindestens einige der Mehrzahl der diskontinuierlichen Mittel im Wesentlichen ausgerichtet sind; und/oder
(e) die diskontinuierlichen Fasern ein durchschnittliches Seitenverhältnis von Länge zu Durchmesser von mindestens 5 aufweisen; und/oder
(f) die diskontinuierlichen Fasern ein durchschnittliches Seitenverhältnis von Länge zu Durchmesser von weniger als 100.000 aufweisen; und/oder
(g) mindestens einige der diskontinuierlichen Fasern eine durchschnittliche Länge aufweisen, die im Wesentlichen die Dicke des Substrats überspannt; und/oder
(h) mindestens einige der diskontinuierlichen Mittel Plättchen und/oder Ellipsoide umfassen, wobei die Plättchen bevorzugt eine charakteristische Abmessung zwischen 5 nm und 15 mm und/oder eine maximale Abmessung von weniger als 1 mm aufweisen.

5. Artikel gemäß einem der Ansprüche 1-4, wobei mindestens einige der diskontinuierlichen Mittel:
(a) ein natürliches Material umfassen; und/oder
(b) ein synthetisches Material umfassen; und/oder
(c) Glas umfassen; und/oder
(d) Kohlenstofffasern umfassen; und/oder
(e) nicht magnetisch sind; und/oder
(f) magnetisch sind; und/oder
(g) Basalt, Siliciumcarbid, Siliciumnitrid, Aramid, Zirconiumoxid, Nylon, Bor, Aluminiumoxid, Siliciumoxid, Borosilicat, Mullit, Bornitrid und/oder Graphit umfassen; und/oder
(h) unbeschichtet sind; und/oder
(i) mit einer Beschichtung beschichtet sind, wobei die Beschichtung bevorzugt ein Tensid, ein Silan-Kupplungsmittel, Epoxid, Glycerin, Polyurethan und/oder ein organometallisches Kupplungsmittel umfasst.

6. Artikel gemäß einem der Ansprüche 1-5, wobei mindestens 1 Vol.-%, bevorzugt mindestens 5 Vol.-%, bevorzugt mindestens 20 Vol.-%, des Verbundstoffs die diskontinuierlichen Mittel umfasst und/oder wobei nicht mehr als 85 Vol.-% des Verbundstoffs die diskontinuierlichen Mittel umfassen.

7. Artikel gemäß einem der Ansprüche 1-6, wobei mindestens einige der magnetischen Partikel ein ferromagnetisches Material, Eisenoxid, Nickeloxid, Cobaltoxid oder eine Legierung, die ein Seltenerdmetall umfasst, umfassen und/oder wobei die magnetischen Partikel einen durchschnittlichen Durchmesser von weniger als 10 Mikrometern aufweisen.

8. Artikel gemäß einem der Ansprüche 1-7, wobei der Verbundstoff ferner ein Bindemittel umfasst, das die Mehrzahl von Endlosfasern und die Mehrzahl von diskontinuierlichen Mitteln bindet, wobei das Bindemittel bevorzugt umfasst:
(a) ein Harz; und/oder
(b) einen Thermoplast; und/oder
(c) eine thermoplastische Schmelze; und/oder
(d) ein thermoplastisches Harz; und/oder
(e) einen Duroplast; und/oder
(f) eine flüchtige Verbindung; und/oder
(g) ein Epoxid, Polyester, Vinylester, Polyethylenimin, Polyetherketonketon, Polyaryletherketon, Polyetheretherketon, Polyphenylensulfid, Polyethylenterephthalat, Polycarbonate, Polymethylmethacrylat, Acrylnitril-Butadien-Styrol, Polyacrylnitril, Polypropylen, Polyethylen, Nylon, einen Silikonkautschuk, Polyvinylidenfluorid und/oder StyrolButadien-Kautschuk; und/oder
(h) ein präkeramisches Monomer, wobei das präkeramische Monomer bevorzugt ein Siloxan, ein Silazan und/oder ein Carbosilan umfasst.

9. Verfahren, umfassend:
das Bereitstellen einer Flüssigkeit, umfassend eine Mehrzahl von diskontinuierlichen Mitteln mit einer Mehrzahl von daran adsorbierten magnetischen Partikeln, wobei mindestens einige der diskontinuierlichen Mittel diskontinuierliche Fasern umfassen, wobei die diskontinuierlichen Fasern einen durchschnittlichen Durchmesser zwischen 10 Mikrometern und 100 Mikrometern aufweisen;
das Aussetzen der Flüssigkeit einer Mehrzahl von Endlosfasern, die ein Substrat definieren;
das Anlegen eines Magnetfelds an die Flüssigkeit, um eine Ausrichtung von mindestens einigen der Mehrzahl von diskontinuierlichen Mitteln innerhalb der Mehrzahl von Endlosfasern zu bewirken; und
das Härten der Flüssigkeit, um einen Verbundstoff zu bilden, der das Substrat umfasst, so dass die Mehrzahl von diskontinuierlichen Mitteln mindestens 40% der Masse des Verbundstoffs umfasst.

10. Verfahren gemäß Anspruch 9, wobei die Flüssigkeit ferner ein Lösungsmittel umfasst und das Verfahren ferner das Erhitzen der Flüssigkeit umfasst, um zumindest einen Teil des Lösungsmittels, bevorzugt ein organisches Lösungsmittel, zu entfernen, wobei die Flüssigkeit bevorzugt umfasst:
(a) Isopropanol, Butanol, Ethanol, Aceton, Toluol und/oder Xylol; und/oder
(b) eine Aufschlämmung; und/oder
(c) einen Duroplast; und/oder
(d) ein Öl; und/oder
(e) Wasser.

11. Verfahren gemäß einem der Ansprüche 9-10, wobei das Aussetzen der Flüssigkeit einer Mehrzahl von Endlosfasern das Beschichten und/oder Eintauchen der Mehrzahl von Endlosfasern mit der Flüssigkeit umfasst.

12. Verfahren gemäß einem der Ansprüche 9 bis 11, wobei das Magnetfeld:
(a) eine minimale Feldstärke von mindestens 0,01 T aufweist; und/oder
(b) eine maximale Feldstärke von nicht mehr als 10 T aufweist; und/oder
(c) ein zeitlich veränderliches Magnetfeld ist, wobei das zeitlich veränderliche Magnetfeld bevorzugt eine Frequenz zwischen 1 Hz und 500 Hz aufweist.

13. Verfahren gemäß einem der Ansprüche 9-12, wobei mindestens 5 Vol.-% der Flüssigkeit die diskontinuierlichen Mittel umfassen und/oder nicht mehr als 85 Vol.-% der Flüssigkeit die diskontinuierlichen Mittel umfassen.

14. Verfahren gemäß einem der Ansprüche 9-13, wobei das Härten der Flüssigkeit zum Bilden eines Verbundstoffs umfasst:
(a) das Gelieren der Flüssigkeit; und/oder
(b) das Verdampfen mindestens eines Teils der Flüssigkeit; und/oder
(c) das Gefrieren mindestens eines Teils der Flüssigkeit; und/oder
(d) das Entfernen mindestens eines Teils der Flüssigkeit.

15. Verfahren gemäß einem der Ansprüche 9-14, ferner umfassend das Eindringen eines Bindemittels in den Verbundstoff, bevorzugt:
(a) wobei mindestens ein Teil des Bindemittels durch Kapillarwirkung, bevorzugt durch Schwerkraft, in den Verbundstoff eindringt; und/oder
(b) wobei das Eindringen eines Bindemittels in den Verbundstoff das Ausüben von Druck auf das Bindemittel umfasst, um das Eindringen des Bindemittels in den Verbundstoff zu bewirken, wobei das Ausüben von Druck bevorzugt (i) das Heißpressen des Bindemittels in den Verbundstoff, und/oder (ii) das Kalandrieren des Bindemittels in den Verbundstoff, und/oder (iii) das Eindringen des Bindemittels in den Verbundstoff mittels einer Vakuuminfusion umfasst; und/oder
(c) ferner umfassend das Härten des Bindemittels; und/oder
(d) wobei das Bindemittel (i) ein Harz, und/oder (ii) einen Thermoplast, und/oder (iii) eine thermoplastische Schmelze, und/oder (d) ein thermoplastisches Harz, und/oder (e) einen Duroplast, und/oder (f) eine flüchtige Verbindung umfasst; und/oder
(e) ferner umfassend das Erhitzen des Verbundstoffs nach dem Eindringen des Bindemittels in den Verbundstoff.

## Revendications

1. Article, comprenant :
un composite comprenant une pluralité de fibres continues définissant un substrat, et une pluralité d'agents discontinus contenus à l'intérieur d'au moins une partie du substrat de telle manière que la pluralité d'agents discontinus comprend au moins 40 % de la masse du composite, dans lequel :
au moins certains de la pluralité d'agents discontinus présentent une pluralité de particules magnétiques adsorbées sur ceux-ci ; et
au moins certains des agents discontinus comprennent des fibres discontinues, dans lequel les fibres discontinues présentent un diamètre moyen entre 10 micromètres et 100 micromètres.

2. Article selon la revendication 1, dans lequel la pluralité d'agents discontinus sont contenus à l'intérieur et positionnés sensiblement de manière orthogonale au substrat.

3. Article selon l'une quelconque des revendications 1 ou 2, dans lequel la pluralité de fibres continues :
(a) définissent un tissu ; et/ou
(b) définissent un câble ; et/ou
(c) définissent un filament, un fil, un brin, un voile ou un mat ; et/ou
(d) sont assemblées ensemble pour définir le substrat ; et/ou
(e) sont entrelacées ensemble pour définir le substrat, préférablement dans lequel au moins certaines de la pluralité de fibres continues tissées sont bidirectionnelles et/ou multidirectionnelles et/ou quasi-isotropes ; et/ou
dans lequel au moins certaines de la pluralité de fibres continues :
(a) ne sont pas tissées ensemble ; et/ou
(b) sont uni-directionnelles ; et/ou
(c) comprennent des fibres naturelles ; et/ou
(d) comprennent des fibres synthétiques ; et/ou
(e) comprennent du carbone, du basalte, du carbure de silicium, de l'aramide, de la zircone, du nylon, du bore, de l'alumine, de la silice, du borosilicate, de la mullite et/ou du coton ; et/ou
(f) sont sensiblement parallèles ; et/ou
dans lequel les fibres continues présentent une longueur moyenne d'au moins 5 millimètres ; et/ou dans lequel les fibres continues présentent un diamètre moyen entre 10 micromètres et 100 micromètres ; et/ou
dans lequel les fibres continues présentent un rapport de dimensions moyen de la longueur au diamètre qui est supérieur ou égal à 100.

4. Article selon l'une quelconque des revendications 1 à 3, dans lequel :
(a) les fibres discontinues présentent une longueur moyenne inférieure à 5 millimètres ou présentent une longueur moyenne entre 5 nm et 15 mm ; et/ou
(b) la pluralité d'agents discontinus ne comprend pas plus de 97 % en masse du composite ; et/ou
(c) au moins certains de la pluralité d'agents discontinus sont orientés de manière aléatoire ; et/ou
(d) au moins certains de la pluralité d'agents discontinus sont sensiblement alignés ; et/ou
(e) les fibres discontinues présentent un rapport de dimensions moyen de la longueur au diamètre qui est d'au moins 5 ; et/ou
(f) les fibres discontinues présentent un rapport de dimensions moyen de la longueur au diamètre qui est inférieur à 100 000 ; et/ou
(g) au moins certaines des fibres discontinues présentent une longueur moyenne qui s'étend sensiblement sur l'épaisseur du substrat ; et/ou
(h) au moins certains des agents discontinus comprennent des plaquettes et/ou des ellipsoïdes, préférablement dans lequel les plaquettes présentent une dimension caractéristique entre 5 nm et 15 mm et/ou une dimension maximale inférieure à 1 mm.

5. Article selon l'une quelconque des revendications 1 à 4, dans lequel au moins certains des agents discontinus :
(a) comprennent un matériau naturel ; et/ou
(b) comprennent un matériau synthétique ; et/ou
(c) comprennent du verre ; et/ou
(d) comprennent des fibres de carbone ; et/ou
(e) sont non magnétiques ; et/ou
(f) sont magnétiques ; et/ou
(g) comprennent du basalte, du carbure de silicium, du nitrure de silicium, de l'aramide, de la zircone, du nylon, du bore, de l'alumine, de la silice, du borosilicate, de la mullite, du nitrure de bore et/ou du graphite ; et/ou
(h) sont non revêtus ; et/ou
(i) sont revêtus d'un revêtement, préférablement dans lequel le revêtement comprend un tensioactif, un agent de couplage au silane, de l'époxy, de la glycérine, du polyuréthane et/ou un agent de couplage organométallique.

6. Article selon l'une quelconque des revendications 1 à 5, dans lequel au moins 1 % en volume du composite comprend les agents discontinus, préférablement au moins 5 % en volume, préférablement au moins 20 % en volume, et/ou dans lequel pas plus de 85 % en volume du composite comprend les agents discontinus.

7. Article selon l'une quelconque des revendications 1 à 6, dans lequel au moins certaines des particules magnétiques comprennent un matériau ferromagnétique, de l'oxyde de fer, de l'oxyde de nickel, de l'oxyde de cobalt, ou un alliage comprenant un métal de terre rare, et/ou dans lequel les particules magnétiques présentent un diamètre moyen inférieur à 10 micromètres.

8. Article selon l'une quelconque des revendications 1 à 7, dans lequel le composite comprend en outre un liant reliant la pluralité de fibres continues et la pluralité d'agents discontinus, préférablement dans lequel le liant comprend :
(a) une résine ; et/ou
(b) une matière thermoplastique ; et/ou
(c) une masse fondue thermoplastique ; et/ou
(d) une résine thermoplastique ; et/ou
(e) une matière thermodurcie ; et/ou
(f) un composé volatil ; et/ou
(g) de l'époxy, du polyester, de l'ester vinylique, de la polyéthylèneimine, de la polyéthercétonecétone, de la polyaryléthercétone, de la polyétheréthercétone, du poly(sulfure de phénylène), du poly(téréphtalate d'éthylène), des polycarbonates, du poly(méthacrylate de méthyle), de l'acrylonitrile butadiène styrène, du polyacrylonitrile, du polypropylène, du polyéthylène, du nylon, un caoutchouc de silicone, du poly(fluorure de vinylidène) et/ou du caoutchouc de styrène butadiène ; et/ou
(h) un monomère précéramique, préférablement dans lequel le monomère précéramique comprend un siloxane, un silazane, et/ou un carbosilane.

9. Procédé, comprenant :
une fourniture d'un liquide comprenant une pluralité d'agents discontinus présentant une pluralité de particules magnétiques adsorbées sur ceux-ci, dans lequel au moins certains des agents discontinus comprennent des fibres discontinues, dans lequel les fibres discontinues présentent un diamètre moyen entre 10 micromètres et 100 micromètres ;
une exposition du liquide à une pluralité de fibres continues définissant un substrat ;
une application d'un champ magnétique sur le liquide pour provoquer l'alignement d'au moins certains de la pluralité d'agents discontinus à l'intérieur de la pluralité de fibres continues ; et
un durcissement du liquide pour former un composite comprenant le substrat, de telle manière que la pluralité d'agents discontinus comprend au moins 40 % de la masse du composite.

10. Procédé selon la revendication 9, dans lequel le liquide comprend en outre un solvant, et le procédé comprend en outre un chauffage du liquide pour éliminer au moins une partie du solvant, préférablement un solvant organique, préférablement dans lequel le liquide comprend :
(a) de l'isopropanol, du butanol, de l'éthanol, de l'acétone, du toluène et/ou du xylène ; et/ou
(b) une suspension ; et/ou
(c) une matière thermodurcie ; et/ou
(d) une huile ; et/ou
(e) de l'eau.

11. Procédé selon l'une quelconque des revendications 9 à 10, dans lequel l'exposition du liquide à une pluralité de fibres continues comprend un revêtement et/ou une immersion de la pluralité de fibres continues avec le liquide.

12. Procédé selon l'une quelconque des revendications 9 à 11, dans lequel le champ magnétique :
(a) présente une intensité de champ minimale d'au moins 0,01 T ; et/ou
(b) présente une intensité de champ maximale de pas plus de 10 T ; et/ou
(c) est un champ magnétique variant dans le temps, préférablement dans lequel le champ magnétique variant dans le temps présente une fréquence entre 1 Hz et 500 Hz.

13. Procédé selon l'une quelconque des revendications 9 à 12, dans lequel au moins 5 % en volume du liquide comprend les agents discontinus et/ou pas plus de 85 % en volume du liquide comprend les agents discontinus.

14. Procédé selon l'une quelconque des revendications 9 à 13, dans lequel le durcissement du liquide pour former un composite comprend :
(a) le fait d'amener le liquide à se gélifier ; et/ou
(b) une évaporation d'au moins une partie du liquide ; et/ou
(c) une congélation d'au moins une partie du liquide ; et/ou
(d) une élimination d'au moins une partie du liquide.

15. Procédé selon l'une quelconque des revendications 9 à 14, comprenant en outre une perméation d'un liant dans le composite, préférablement :
(a) dans lequel au moins une partie du liant pénètre dans le composite par action capillaire, préférablement par gravité ; et/ou
(b) dans lequel la perméation d'un liant dans le composite comprend une application de pression sur le liant pour amener le liant à pénétrer dans le composite, préférablement dans lequel l'application de pression comprend (i) un pressage à chaud du liant dans le composite, et/ou (ii) un calandrage du liant dans le composite, et/ou (iii) une perméation du liant dans le composite en utilisant une infusion sous vide ; et/ou
(c) comprenant en outre le fait d'amener le liant à durcir ; et/ou
(d) dans lequel le liant comprend (i) une résine, et/ou (ii) une matière thermoplastique, et/ou (iii) une masse fondue thermoplastique, et/ou (d) une résine thermoplastique, et/ou (e) une matière thermodurcie, et/ou (f) un composé volatil ; et/ou
(e) comprenant en outre un chauffage du composite après la perméation du liant dans le composite.
